# EUROPEAN PATENT APPLICATION

(11) **EP 4 050 520 A1**
(43) Date of publication of application: **31.08.2022**
(21) Application number: 21203654.5
(22) Date of filing: 20.10.2021
(51) Int. Cl.: G06N 3/04, G06N 3/08, G06N 3/063

(54) **NEURAL NETWORK OPERATION METHOD AND DEVICE**

(30) Priority: 25.02.2021 KR 20210025611; 17.03.2021 KR 20210034491
(71) Applicant: Samsung Electronics Co., Ltd., Suwon-si, Gyeonggi-do 16677 (KR)
(72) Inventor: Lee, Sehwan, Suwon-si, Gyeonggi-do (KR)
(74) Representative: Grünecker Patent- und Rechtsanwälte PartG mbB

(57) **Abstract**

A neural network operation device includes an input feature map buffer to store an input feature map, a weight buffer to store a weight, an operator including an adder tree unit to perform an operation between the input feature map and the weight by a unit of a reference bit length, and a controller to map the input feature map and the weight to the operator to provide one or both of a mixed precision operation and data parallelism.

## Description

### BACKGROUND

### 1. Field

The following description relates to a neural network operation method and device.

### 2. Description of Related Art

An artificial neural network may be implemented based on a computational architecture. As the artificial neural network progresses, research is being more actively conducted to analyze input data and extract valid information using the artificial neural network in various types of electronic systems. A device for processing the artificial neural network may need a large quantity of computation or operation for complex input data. Thus, there is a desire for a technology for analyzing, in real time, a massive quantity of input data using an artificial neural network and effectively processing an operation associated with the artificial neural network to extract desired information.

### SUMMARY

This Summary is provided to introduce a selection of concepts in a simplified form that is further described below in the Detailed Description. This Summary is not intended to identify key features or essential features of the claimed subject matter, nor is it intended to be used as an aid in determining the scope of the claimed subject matter.

In one general aspect, a neural network operation device includes an input feature map buffer configured to store an input feature map, a weight buffer configured to store a weight, an operator including an adder tree unit configured to perform an operation between the input feature map and the weight by a unit of a reference bit length, and a controller configured to map the input feature map and the weight to the operator to provide one or both of a mixed precision operation and data parallelism. An operation performance speed may increase/decrease in inverse proportion to the increase/decrease of a bit-length.

In response to a bit length of the input feature map being half the reference bit length, the controller may increase a number of channels of the input feature map to be mapped to the operator by a factor of two, to provide the mixed precision operation.

In response to a bit length of the weight being half the reference bit length, the controller may map the weight to the adder tree unit by a unit of a group of two weights. In response to the bit length of the input feature map being half the reference bit length, the controller may map the input feature map to the adder tree unit by a unit of a group of two input feature maps.

The adder tree unit may include a multiplier portion including a multiplier configured to perform a multiply operation between the input feature map and the weight, an adder tree configured to add outputs of the multiplier portion, and an accumulator configured to accumulate and sum outputs of the adder tree.

The adder tree unit may further include a first multiplexer configured to multiplex respective input feature maps included in the group of the two input feature maps into first transformed data and second transformed data that each have the reference bit length. The multiplier portion may include a first multiplier configured to perform a multiply operation between the first transformed data and a first weight included in the group of the two weights, and a second multiplier configured to perform a multiply operation between the second transformed data and a second weight included in the group of the two weights.

The adder tree unit may further include a shifter configured to shift an output of the first multiplier, and an adder configured to add an output of the shifter to an output of the second multiplier.

In response to the bit length of the input feature map being double the reference bit length, the controller may map the input feature map and the weight to the operator such that a number of channels of the output feature map is halved, to provide the mixed precision operation.

In response to the bit length of the weight being double the reference bit length, the controller may group two adder tree units together into one group and map the weight to the one group of the adder tree units.

The one group of the adder tree units may include a first adder tree unit and a second adder tree unit. The controller may map a first portion of the weight to the first adder tree unit, and map a second portion of the weight to the second adder tree unit.

In response to the bit length of the input feature map being double the reference bit length, the controller may group two adder tree units together into one group and map the input feature map to the one group of the adder tree units.

The one group of the adder tree units may include a first adder tree unit and a second adder tree unit. The controller may map a first portion of the input feature map to the one group of the adder tree units in a first cycle, and map a second portion of the input feature map to the one group of the adder tree units in a second cycle.

The adder tree unit may include a first adder tree unit to perform an operation between the first portion of the input feature map and a first portion of the weight in the first cycle, and perform an operation between the second portion of the input feature map and the first portion of the weight in the second cycle. The adder tree unit may include a second adder tree unit to perform an operation between the first portion of the input feature map and a second portion of the weight in the first cycle, and perform an operation between the second portion of the input feature map and the second portion of the weight in the second cycle.

The adder tree unit may include a plurality of adder tree units, and the controller may group the adder tree units together into one group by a unit of a weight parallelism size and map the same weight to the one group of the adder tree units, to provide the data parallelism.

The adder tree unit may include a plurality of adder tree units, and the controller may map the weight to the operator by matching the weight to the reference bit length such that a product of the weight parallelism size and a number of the adder tree units is constant, to provide the data parallelism.

In another general aspect, a neural network operation method includes storing an input feature map and a weight, mapping the input feature map and the weight to an operator to provide one or both of a mixed precision operation and data parallelism, and performing an operation between the mapped input feature map and the mapped weight. The operator may include an adder tree unit configured to perform the operation by a unit of a reference bit length.

In response to a bit length of the input feature map being half the reference bit length, the mapping may include increasing a number of channels of the input feature map to be mapped to the operator by a factor of two to provide the mixed precision operation.

In response to a bit length of the weight being half the reference bit length, the mapping may include mapping the weight to the adder tree unit by a unit of a group of two weights. In response to the bit length of the input feature map being half the reference bit length, the mapping may include mapping the input feature map to the adder tree unit by a unit of a group of two input feature maps.

The performing of the operation may include multiplexing respective input feature maps included in the group of the two input feature maps into first transformed data and second transformed data that each have the reference bit length, performing a multiply operation between the first transformed data and a first weight included in the group of the two weights using a first multiplier, performing a multiply operation between the second transformed data and a second weight included in the group of the two weights using a second multiplier, and adding an output of the first multiplier to an output of the second multiplier.

The performing of the operation may further include shifting the output of the first multiplier.

In response to the bit length of the input feature map being double the reference bit length, the mapping may include mapping the input feature map and the weight to the operator such that a number of channels of an output feature map is halved to provide the mixed precision operation.

In response to the bit length of the weight being double the reference bit length, the mapping may include grouping two adder tree units together into one group and mapping the weight to the one group of the adder tree units.

The one group of the adder tree units may include a first adder tree unit and a second adder tree unit. The mapping may include mapping a first portion of the weight to the first adder tree unit, and mapping a second portion of the weight to the second adder tree unit.

In response to the bit length of the input feature map being double the reference bit length, the mapping may include grouping two adder tree units together into one group and mapping the input feature map to the one group of the adder tree units.

The one group of the adder tree units may include a first adder tree unit and a second adder tree unit. The mapping may include mapping a first portion of the input feature map to the one group of the adder tree units in a first cycle, and mapping a second portion of the input feature map to the one group of the adder tree units in a second cycle.

The performing of the operation may include performing an operation between the first portion of the input feature map and a first portion of the weight in the first cycle and performing an operation between the second portion of the input feature map and the first portion of the weight in the second cycle, and performing an operation between the first portion of the input feature map and a second portion of the weight in the first cycle and performing an operation between the second portion of the input feature map and the second portion of the weight in the second cycle.

The adder tree unit may include a plurality of adder tree units, and the mapping may include grouping adder tree units together into one group by a unit of a weight parallelism size and mapping a same weight to the one group of the adder tree units to provide the data parallelism.

The adder tree unit may include a plurality of adder tree units, and the mapping may include mapping the weight to the operator based on the reference bit length such that a product of the weight parallelism size and a number of the adder tree units is constant to provide the data parallelism.

In another general aspect, a neural network operation device includes one or more memories configured to store an input feature map and a weight; and one or more processors configured to: map the input feature map and the weight based on a reference bit length to output a mapped feature map and a mapped weight, and perform an operation between the mapped input feature map and the mapped weight to output an output feature map.

The one or more processors may be configured to, in a case in which a bit length of the input feature map is smaller than the reference bit length, increase a number of channels of the input feature map to be mapped based on a ratio of the reference bit length to the bit length of the input feature map.

The one or more processors may be configured to, in a case in which a bit length of the weight is smaller than the reference bit length, map the weight by a unit of a group of n weights, where n is based on a ratio of the reference bit length to the bit length of the weight.

Other features and aspects will be apparent from the following detailed description, the drawings, and the claims.

### BRIEF DESCRIPTION OF THE DRAWINGS

FIG. 1A illustrates an example of a deep learning operation method using an artificial neural network.
FIGS. 1 B and 1C illustrate examples of performing a deep learning-based convolution operation.
FIG. 2 illustrates an example of a hardware configuration of a neural network operation device.
FIG. 3 illustrates an example of a hardware architecture of the neural network operation device illustrated in FIG. 2.
FIGS. 4A and 4B illustrate an example of a method of operating a neural network operation device in a case in which a bit length of input data is half a reference bit length.
FIGS. 5A and 5B illustrate an example of a method of operating a neural network operation device in a case in which a bit length of input data is double a reference bit length.
FIGS. 6A and 6B illustrate examples of a method of operating a neural network operation device that provides data parallelism.
FIG. 7 illustrates an example of a neural network operation method.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for the purpose of describing particular examples only, and is not to be used to limit the disclosure. As used herein, the singular forms "a," "an," and "the" are intended to include the plural forms as well, unless the context clearly indicates otherwise. As used herein, the term "and/or" includes any one and any combination of any two or more of the associated listed items. As used herein, the terms "include," "comprise," and "have" specify the presence of stated features, numbers, operations, elements, components, and/or combinations thereof, but do not preclude the presence or addition of one or more other features, numbers, operations, elements, components, and/or combinations thereof.

In addition, terms such as first, second, A, B, (a), (b), and the like may be used herein to describe components. Each of these terminologies is not used to define an essence, order, or sequence of a corresponding component but used merely to distinguish the corresponding component from other component(s).

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween. Likewise, expressions, for example, "between" and "immediately between" and "adjacent to" and "immediately adjacent to" may also be construed as described in the foregoing.

Unless otherwise defined, all terms, including technical and scientific terms, used herein have the same meaning as commonly understood by one of ordinary skill in the art to which this disclosure pertains consistent with and after an understanding of the present disclosure. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

Also, in the description of example embodiments, detailed description of structures or functions that are thereby known after an understanding of the disclosure of the present application will be omitted when it is deemed that such description will cause ambiguous interpretation of the example embodiments. Hereinafter, examples will be described in detail with reference to the accompanying drawings, and like reference numerals in the drawings refer to like elements throughout.

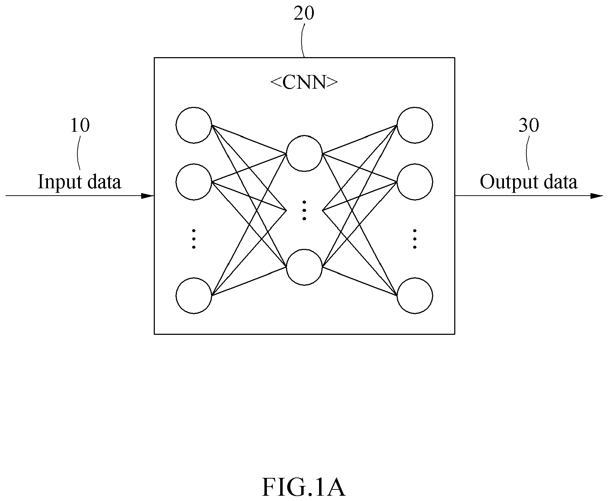

FIG. 1A illustrates an example of a deep learning operation method using an artificial neural network.

An artificial intelligence (Al) algorithm including deep learning and the like may input data to an artificial neural network (ANN) and learn output data through an operation, such as a convolution operation and the like. The ANN may refer to a computational architecture that models biological characteristics of a human brain. In the ANN, nodes corresponding to neurons of the brain may be connected to one another and collectively operate to process input data. There are various types of neural networks including, for example, a convolutional neural network (CNN), a recurrent neural network (RNN), a deep belief network (DBN), a restricted Boltzmann machine (RBM), and the like, but examples are not limited thereto. For example, in a feedforward neural network, neurons of the neural network may have links with other neurons. The links may expand in one direction, for example, a forward direction, through the neural network.

Referring to FIG. 1A, input data 10 may be input to an ANN, for example, a CNN 20 as illustrated, and output data 30 may be output through the ANN. The illustrated ANN may be a deep neural network (DNN) including two or more layers.

The CNN 20 may be used to extract features, for example, an edge, a line, a color, and the like, from the input data 10. The CNN 20 may include a plurality of layers, each of which may receive data, process the received data, and generate data to be output therefrom. Data to be output from a layer may be a feature map that is generated through a convolution operation between an image or feature map that is input to the CNN 20 and a weight value of at least one filter. Initial layers of the CNN 20 may operate to extract low-level features, such as edges or gradients from an input. Subsequent layers of the CNN 20 may operate to extract gradually more complex features such as an eye, a nose, and the like in an image.

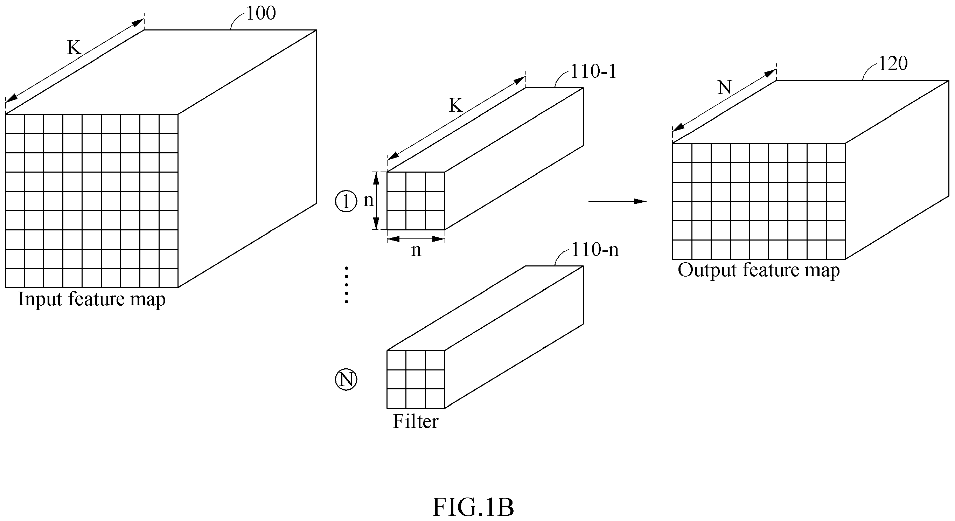

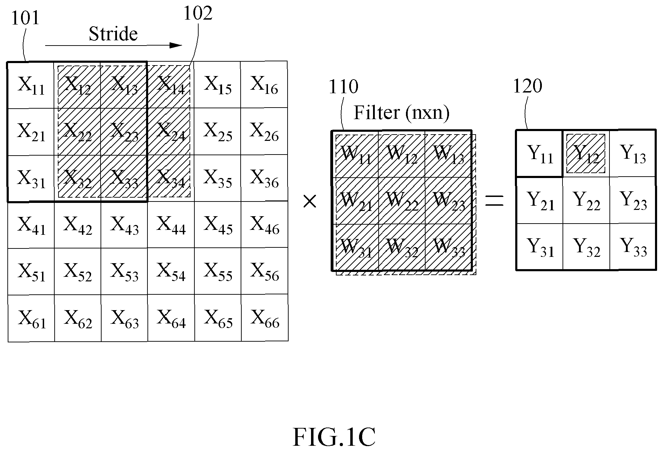

FIGS. 1B and 1C illustrate examples of performing a deep learning-based convolution operation.

Referring to FIG. 1B, an input feature map 100 may be a set of pixel values or numeric data of an image input to an ANN, but examples of which are not limited thereto. In the example of FIG. 1B, the input feature map 100 may be defined by pixel values of an image that is a target for training through the ANN. For example, the input feature map 100 may have 256 × 256 pixels and K channels. However, these values are provided merely as an example, and a pixel size of the input feature map 100 is not limited to the foregoing example.

In the example, N filters 110-1 through 110-n may be formed. Each of the filters 110-1 through 110-n may include n by n (n × n) weight values. For example, each of the filters 110-1 through 110-n may have 3 × 3 pixels and K depth values. However, the size of each of the filters 110-1 through 110-n is provided merely as an example, and the size not limited to the foregoing example.

In an example, referring to FIG. 1C, a process of performing a convolution operation in the ANN may include generating an output value by performing a multiply and add operation between the input feature map 100 and a filter 110 in each layer, and generating an output feature map 120 by accumulating and summing up respective output values.

The process of performing the convolution operation may include performing the multiply and add operation by applying the filter 110 of a certain size, for example, an n × n size, to the input feature map 100 from an upper left end of the input feature map 100 up to a lower right end of the input feature map 100. Hereinafter, performing a convolution operation in a case in which the size of the filter 110 is 3 × 3 will be described as an example.

For example, as illustrated in FIG. 1C, a multiply operation between a total of nine sets (e.g., x11 through x33) of data in a first region 101 at the upper left end and weight values (w11 through w33) of the filter 110 may be respectively performed. The nine sets of data may include three sets of data in a first direction and three sets of data in a second direction, for example, 3x3. Subsequently, output values of the multiply operation, for example, x11*w11, x12*w12, x13*w13, x21*w21, x22*w22, x23*w23, x31*w31, x32*w32, and x33*w33, may all be accumulated and summed up, and thus 1-1 output data y11 of the output feature map 120 may be generated.

Subsequently, the operations may be performed by moving, by a unit of data, from the first region 101 at the upper left end to a second region 102 of the input feature map 100. In the convolution operation, the number of movements of data in the input feature map 100 may be referred to as stride, and the size of the output feature map 120 to be generated may be determined based on the size of stride. For example, in a case of stride being 1, the multiply operation between a total of nine sets of input data (e.g., x12 through x34) included in the second region 102 and the weight values (w11 through w33) of the filter 110 may be performed, and output values of the multiply operation, for example, x12*w11, x13*w12, x14*w13, x22*w21, x23*w22, x24*w23, x32*w31, x33*w32, and x34*w33, may all be accumulated and summed up. Thus, 1-2 output data y12 of the output feature map 120 may be generated.

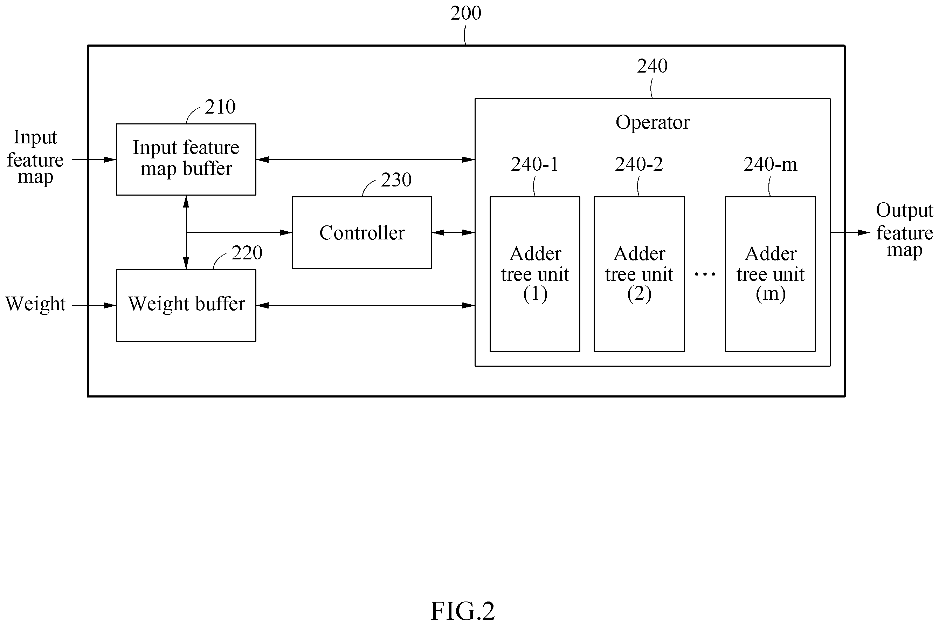

FIG. 2 illustrates an example of a hardware configuration of a neural network operation device.

Referring to FIG. 2, a neural network operation device 200 may generate an output value by performing a multiply and add operation between an input feature map and a weight value of a filter, and generate an output feature map by accumulating and summing up generated output values.

The neural network operation device 200 may include an input feature map buffer 210, a weight buffer 220, a controller 230, and an operator 240.

The input feature map buffer 210 and the weight buffer 220 may store therein input data on which an operation is to be performed through the operator 240. That is, the input feature map buffer 210 and the weight buffer 220 may store the input feature map and the weight value of the filter, respectively, and be implemented as a memory. For example, the memory may store instructions or a program executable by a processor. The instructions may include, for example, instructions for executing operations of the processor and/or instructions for executing operations of each component of the processor.

The memory may be provided as a volatile or nonvolatile memory device.

The volatile memory device may be, for example, a dynamic random-access memory (DRAM), a static RAM (SRAM), a thyristor RAM (T-RAM), a zero-capacitor RAM (Z-RAM), or a twin-transistor RAM (TTRAM).

The nonvolatile memory device may be, for example, an electrically erasable programmable read-only memory (EEPROM), a flash memory, a magnetic RAM (MRAM), a spin-transfer torque (STT) MRAM (STT-MRAM), a conductive bridging RAM (CBRAM), a ferroelectric RAM (FeRAM), a phase-change RAM (PRAM), a resistive RAM (RRAM), a nanotube RRAM, a polymer RAM (PoRAM), a nano-floating gate memory (NFGM), a holographic memory, a molecular electronic memory device, or an insulator resistance change memory.

The controller 230 may map the input feature map and the weight to the operator 240 to provide at least one of a mixed precision operation or data parallelism.

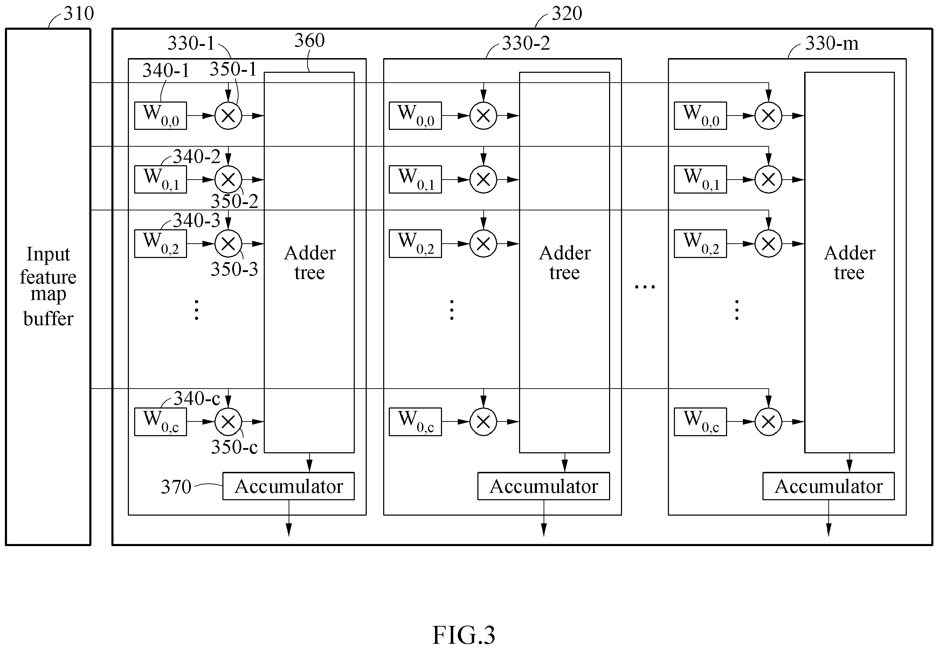

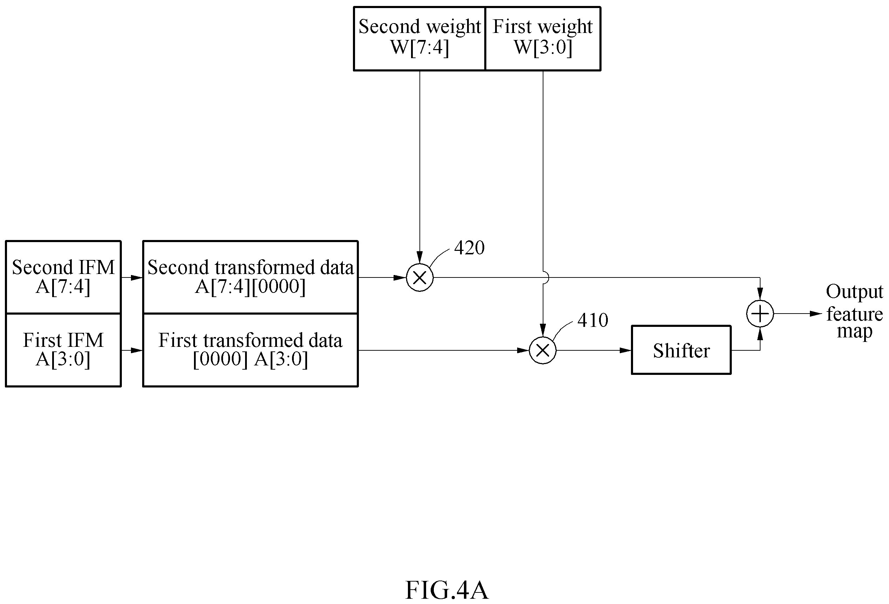

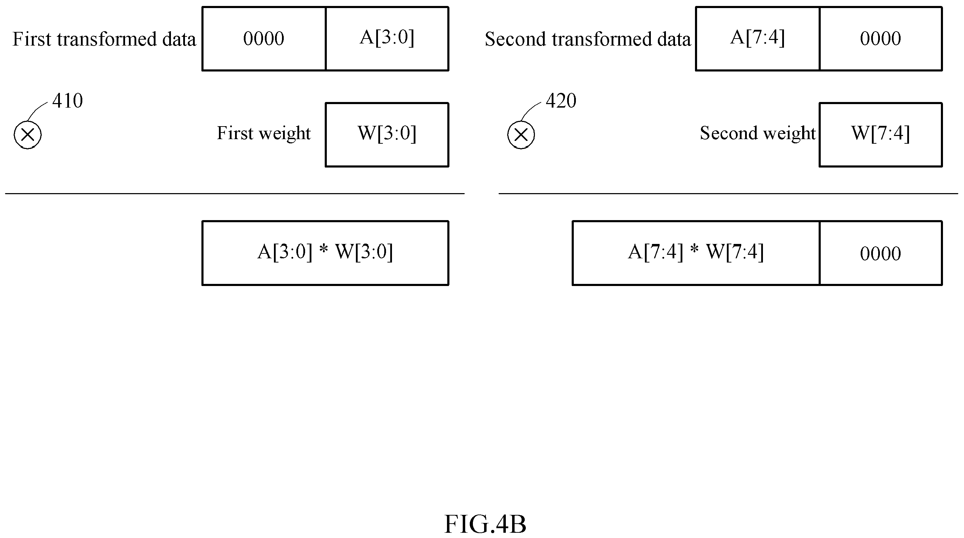

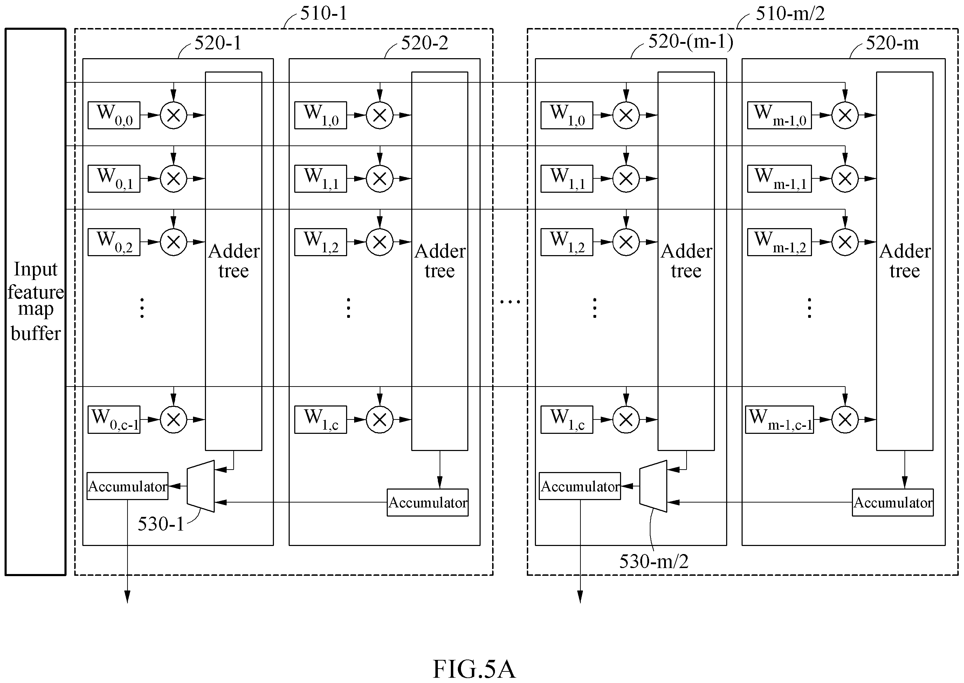

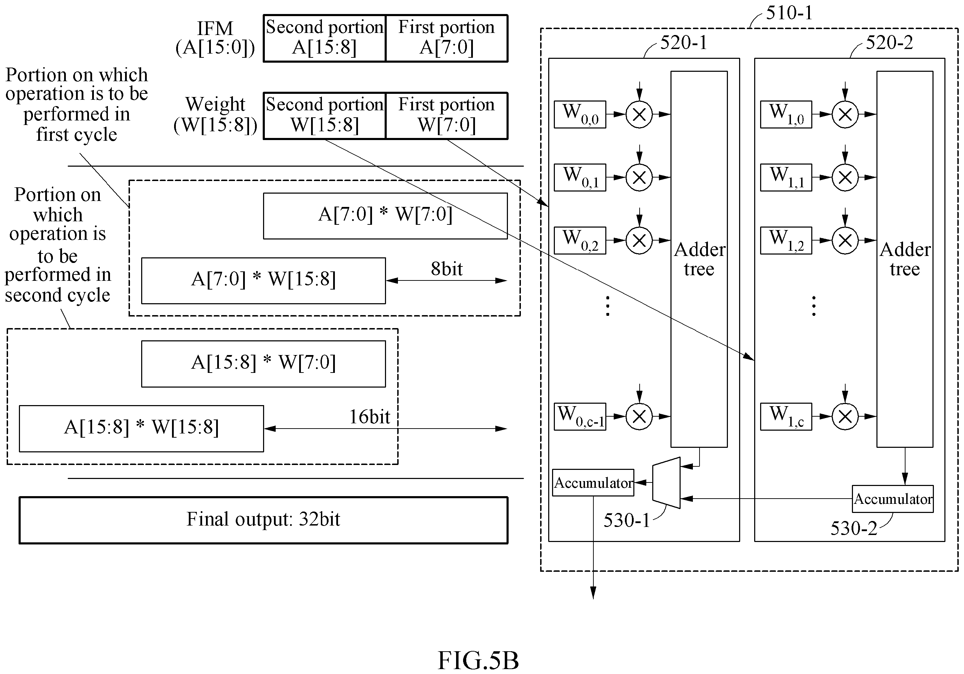

A neural network-based operation may differ in a necessary operation format based on a type of an applied application. For example, in a case of an application for determining a type of object in an image, an 8 bit or lower-bit precision may suffice. In a case of a voice-related application, an 8 bit or higher-bit precision may be needed. The neural network operation device 200 may provide a mixed precision that executes learning faster and uses a memory less by using a bit precision flexibly based on a situation. A method of providing the mixed precision will be described hereinafter with reference to FIGS. 3, and 4A and 4B, and a method of providing the data parallelism will be described hereinafter with reference to FIGS. 5A and 5B.

The mapping described herein may be construed as a process of selecting an operand on which an operation is to be performed through the operator 240 from an input feature map and weight values and applying the selected operand to the processing operator 240. A method of mapping an input feature map and a weight to an operator will be further described hereinafter with reference to FIGS. 3 through 6B.

The controller 230 may include a processor (not shown). The processor may process data stored in the memory (e.g., an input register). The processor may execute computer-readable code (e.g., software) and processor-inducing instructions that are stored in the memory.

The processor may be a hardware-implemented data processing device having a physically structured circuit to execute desired operations. The desired operations may be implemented by the execution of code or instructions included in a program.

The hardware-implemented data processing device may include, for example, a microprocessor, a central processing unit (CPU), a processor core, a multi-core processor, a multiprocessor, an application-specific integrated circuit (ASIC), a field-programmable gate array (FPGA), and the like.

The operator 240 may perform a neural network operation through the mapping of the input feature map and the weight values. The operator 240 may include a plurality of adder tree units 240-1 through 240-m (including adder tree unit 240-2) configured to perform an operation between the input feature map and the weight values by a unit of a reference bit length. The reference bit length may refer to a bit length (e.g., 8 bits) by which the input feature map and the weight values are received. Hereinafter, the reference bit length will be described as 8 bits for the convenience of description, but examples of which are not limited thereto.

FIG. 3 illustrates an example of a hardware architecture of the neural network operation device illustrated in FIG. 2.

Referring to FIG. 3, a neural network operation device 300 may include an input feature map buffer 310, an operator 320, a plurality of adder tree units 330-1 through 330-m (including adder tree unit 330-2), and a plurality of weight buffers 340-1 through 340-c (including weight buffers 340-2 and 340-3). The description provided above with reference to FIG. 2 may be applicable to the example to be described hereinafter with reference to FIG. 3, and thus a more detailed and repeated description will be omitted here for conciseness.

The operator 320 may include a multiplier portion including multipliers 350-1 through 350-c (including multipliers 350-2 and 350-3) each configured to perform a multiply operation between an input feature map and a weight, an adder tree 360 configured to add outputs of the multiplier portion, and an accumulator 370 configured to accumulate and sum up outputs of the adder tree 360.

In a case in which the input feature map and the weight has a reference bit length, the multiplier portion including the multipliers 350-1 through 350-c may receive one input feature map and one weight. For example, with respect to the first adder tree unit 350-1, the first multiplier 350-1 may receive input data of an 8 bit length (e.g., X_{0,1}) of the input feature map and a weight of an 8 bit length (e.g., W_{0,0}), and perform a multiply operation for multiplying the input data (e.g., X_{0,1}) and the weight (e.g., W_{0,0}). Similarly, the second multiplier 350-2 through the cth multiplier 350-c may receive input data of an 8 bit length (e.g., X_{0,1} through X_{0,c}) of the input feature map and weights with an 8 bit length (e.g., W_{0,0} through W_{0,c}), and perform a multiply operation for multiplying the input data (e.g., X_{0,1} through X_{0,c}) and the weights (e.g., W_{0,0} through W_{0,c}). The adder tree 360 may add respective outputs of the multipliers 350-1 through 350-c, for example, (X_{0,0}*W_{0,0}+ X_{0,1}*W_{0,1}+ X_{0,2}*W_{0,2}+ ...+ X_{0,c}*W_{0,c}), and the accumulator 370 may accumulate and sum up outputs of the adder tree 360 to generate output data corresponding to a first channel of an output feature map. In the same manner as described above, the second adder tree unit 330-1 through the mth adder tree unit 330-m may generate output data corresponding to a second channel of the output feature map through output data corresponding to an mth channel of the output feature map, respectively.

FIGS. 4A and 4B illustrate an example of a method of operating a neural network operation device in a case in which a bit length of input data is half a reference bit length.

Referring to FIG. 4A, even in a case in which a bit length (e.g., 4 bits) of input data (e.g., an input feature map and/or weight) is half a reference bit length (e.g., 8 bits), a neural network operation device may perform an operation corresponding to a bit precision (which corresponds to the bit length (e.g., 4 bits)).

For example, in a case in which a bit length of input data (e.g., an input feature map and/or weight) is half a reference bit length (e.g., 8 bits), a controller may increase twofold the number of channels (which is the same as the depth of the weight) of the input feature map that is to be mapped to an operator. As described above with reference to FIG. 3, in a case in which the bit length of the input data (e.g., the input feature map and/or weight) is the same as the reference bit length, only a single set of the input data may be input to a multiplier portion. However, in the case in which the bit length of the input data (e.g., the input feature map and/or weight) is half the reference bit length, two sets of the input data may be input to the multiplier portion.

For example, in the case in which the bit length of the input data (e.g., the input feature map and/or weight) is half the reference bit length, the controller may map the two sets of the input data as one group to an adder tree unit. That is, in the case in which the bit length of the input data is the same as the reference bit length, first input data may be mapped to the first adder tree unit 330-1. However, in the case in which the bit length of the input data is half the reference bit length, the first input data and second input data may be mapped to the first adder tree unit 330-1.

In an example, the adder tree unit may further include a first multiplexer (not shown) configured to multiplex each input feature map included in a group of two input feature maps (hereinafter, also referred to as an input feature map group) into first transformed data and second transformed data. In this example, first input feature map (e.g., A[3:0]) may be transformed into the first transformed data (e.g., [0000]A[3:0]) with [0000] added to its left side. In addition, second input feature map (e.g., A[7:4]) may be transformed into the second transformed data (e.g., A[7:4] [0000]) with [0000] added to its right side.

The multiplier portion (e.g., the multipliers 350-1 through 350-c of FIG. 3) may include a first multiplier 410 and a second multiplier 420. The first multiplier 410 may perform a multiply operation between the first transformed data and a first weight included in a group of weights (hereinafter, also referred to as a weight group). The second multiplier 420 may perform a multiply operation between the second transformed data and a second weight included in the weight group.

For example, referring to FIG. 4B, the first multiplier 410 may perform the multiply operation between the first transformed data (e.g., [0000]A[3:0]) and the first weight (e.g., W[3:0]), and the second multiplier 420 may perform the multiply operation between the second transformed data (A[7:4] [0000]) and the second weight (e.g., W[7:4]). In this example, to match the number of digits of an output of the first multiplier 410 and an output of the second multiplier 420, the adder tree unit may further include a shifter configured to shift the output of the first multiplier 410 and an adder configured to add an output of the shifter and the output of the second multiplier 420.

Thus, using the adder tree unit configured to perform an operation between sets of input data having a reference bit length, it is possible to perform an operation between sets of input data of which a bit length is half the reference bit length. Thus, the number of channels of an input feature map to be mapped to the operator may increase twofold, and the performance may thus be doubled.

FIGS. 5A and 5B illustrate an example of a method of operating a neural network operation device in a case in which a bit length of input data is double a reference bit length.

Referring to FIG. 5A, even in a case in which a bit length (e.g., 16 bits) of input data (e.g., an input feature map and/or weight) is double a reference bit length (e.g., 8 bits), a neural network operation device may perform an operation corresponding to a bit precision (which corresponds to the bit length (e.g., 16 bits)).

For example, in a case in which a bit length of input data is double a reference bit length, a controller may group two adder tree units together and map the input data to an adder tree unit group including the two adder tree units. For example, in a case in which the bit length of the input data is the same as the reference bit length, first input data may be mapped to a first adder tree unit, for example, the adder tree unit 330-1 of FIG. 3. However, in the case in which the bit length of the input data is double the reference bit length, a first portion which is a half portion of the input data may be mapped to a first adder tree unit 520-1 and a second portion which is the other half of the input data may be mapped to a second adder tree unit 520-2.

In an example, the controller may map an input feature map and a weight to an operator such that the number of channels of an output feature map is to be halved. For example, in the case in which the bit length of the input data is the same as the reference bit length, output data corresponding to one channel of the output feature map may be generated by each adder tree unit. However, in the case in which the bit length of the input data is double the reference bit length, output data corresponding to one channel of the output feature map may be generated by each adder tree unit group.

The adder tree unit group may include a first adder tree unit and a second adder tree unit, and further include a second multiplexer. For example, as illustrated in FIG. 5A, an adder tree group 510-1 may include a first adder tree unit 520-1, a second adder tree unit 520-2, and a second multiplexer 530-1. An adder tree unit group 510-m/2 may include a first adder tree unit 520-(m-1), a second adder tree unit 520-m, and a second multiplexer 530-m/2.

Referring to FIG. 5B, the controller may map a first portion (e.g., W[7:0]) of a weight to the first adder tree unit 520-1, and a second portion (e.g., W[15:8]) of the weight to the second adder tree unit 520-2. In addition, the controller may map a first portion (e.g., A[7:0]) of an input feature map to the adder tree unit group 510-1 in a first cycle, and a second portion (e.g., A[15:8]) of the input feature map to the adder tree unit group 510-1 in a second cycle. A cycle described herein may refer to a loop.

The first addertree unit 520-1 may perform an operation between the first portion (e.g., A[7:0]) of the input feature map and the first portion (e.g., W[7:0]) of the weight in the first cycle, and perform an operation between the second portion (e.g., A[15:8]) of the input feature map and the first portion (e.g., W[7:0]) of the weight in the second cycle.

The second adder tree unit 520-2 may perform an operation between the first portion (e.g., A[7:0]) of the input feature map and the second portion (e.g., W[15:8]) of the weight in the first cycle, and perform an operation between the second portion (e.g., A[15:8]) of the input feature map and the second portion (e.g., W[15:8]) of the weight in the second cycle.

A result from the first adder tree unit 520-1 and a result from the second adder tree unit 520-2 may have a shift difference corresponding to the reference bit length. Thus, by summing up outputs obtained by shifting the result from the second adder tree unit 520-2 to the result from the first adder tree unit 520-1, output data corresponding to a first channel of an output feature map may be generated.

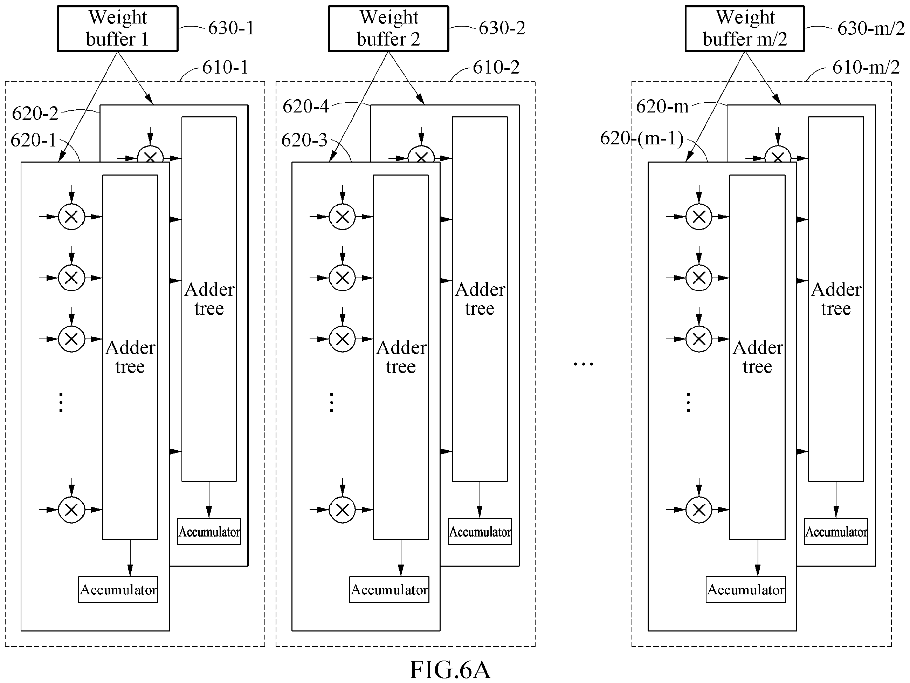

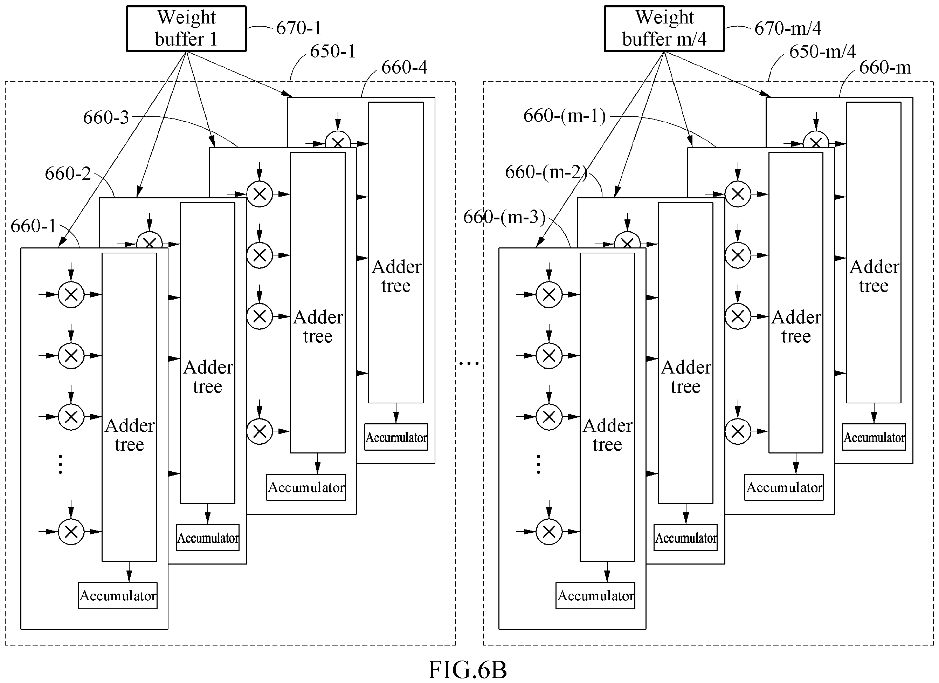

FIGS. 6A and 6B illustrate examples of a method of operating a neural network operation device that provides data parallelism.

To provide parallelism, a controller may group adder tree units together based on a unit of a weight parallelism size, and map the same weight to the adder tree units included in the same adder tree unit group.

Referring to FIG. 6A, in a case in which the weight parallelism size is 2, the controller may set an adder tree unit group by grouping each two adder tree units into one group. In addition, each adder tree unit group may share one weight buffer.

For example, as illustrated, a first adder tree unit group 610-1 may include a first adder tree unit 620-1 and a second adder tree unit 620-2. A second adder tree unit group 610-2 may include a third adder tree unit 620-3 and a fourth adder tree unit 620-4. An m/2th adder tree unit group 610-m/2 may include an m-1th adder tree unit 620-(m-1) and an mth adder tree unit 620-m. The first adder tree unit group 610-1 may share a first weight buffer 630-1, the second adder tree unit group 610-2 may share a second weight buffer 630-2, and the m/2th adder tree unit group 610-m/2 may share an m/2th weight buffer 630-m/2.

Referring to FIG. 6B, in a case in which the weight parallelism size is 4, the controller may set an adder tree unit group by grouping each four adder tree units together into one group. In addition, each adder tree unit group may share one weight buffer.

For example, as illustrated, a first adder tree unit group 650-1 may include a first adder tree unit 660-1, a second adder tree unit 660-2, a third adder tree unit 660-3, and a fourth adder tree unit 660-4. An m/4th adder tree unit group 650-m/4 may include a first adder tree unit 660-(m-3), a second adder tree unit 660-(m-2), a third adder tree unit 660-(m-1), and a fourth adder tree unit 660-m. The first adder tree unit group 660-1 may share a first weight buffer 670-1 and the m/4th adder tree unit group 650-m/4 may share a m/4th weight buffer 670-m/4.

In this example, the size of each weight buffer may be permanently the same irrespective of the weight parallelism size. However, the number of weight buffers may vary based on the weight parallelism size, and thus a total size of weight buffers that is to be determined based on the size of a weight buffer and the number of weight buffers may vary based on the weight parallelism size.

For example, in a case in which the weight parallelism size is 1 as illustrated in FIG. 3, one weight buffer may be present for each adder tree unit. However, in a case in which the weight parallelism size is 2 or greater as illustrated in FIGS. 6A and 6B, one weight buffer may be present for each adder tree unit group. Thus, the total size of weight buffers may be reduced as compared to the example of FIG. 3. In addition, as the area of the weight buffers is reduced, the maximum number of accumulation cycles may also be reduced.

In addition, to provide data parallelism, the controller may map a weight to an operator based on a reference bit length such that a product of the weight parallelism size and the number of adder tree unit groups is constant. Thus, in a case in which a total number of adder tree units is m, the number of adder tree unit groups may be m/2 when the weight parallelism size is 2, and the number of adder tree unit groups may be m/4 when the weight parallelism size is 4.

The total size of weight buffers may vary based on a bit length of a weight. For example, in a case in which the bit length of the weight is half a reference bit length, it may have an effect of expanding twofold the size of weight buffers.

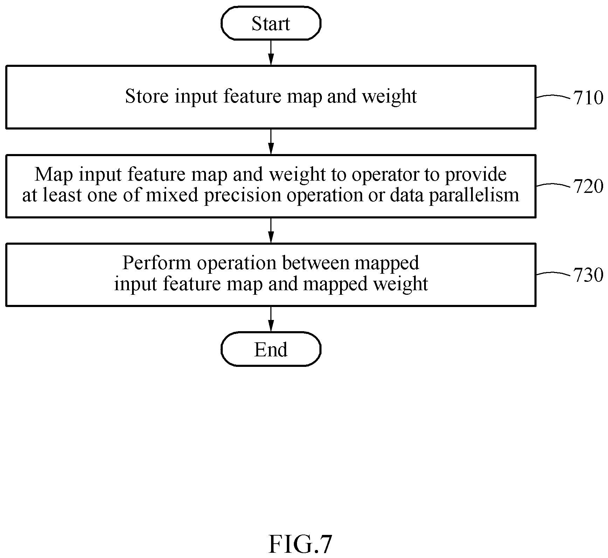

FIG. 7 illustrates an example of a neural network operation method.

Operations 710 through 730 to be described hereinafter with reference to FIG. 7 may be performed by the neural network operation device described above with reference to FIGS. 2 through 6B.

Referring to FIG. 7, in operation 710, the neural network operation device stores an input feature map and a weight.

In operation 720, the neural network operation device maps the input feature map and the weight to an operator to provide at least one of a mixed precision operation or data parallelism.

In an example, in a case in which a bit length of the input feature map is half a reference bit length, the neural network operation device may increase twofold the number of channels of the input feature map to be mapped to the operator in order to provide the mixed precision operation.

In a case in which a bit length of the weight is half a reference bit length, the neural network operation device may map the weight to an adder tree unit by each group of two weights. In the case in which the bit length of the input feature map is half the reference bit length, the neural network operation device may map the input feature map to an adder tree unit by each group of two input feature maps.

In an example, in a case in which the bit length of the input feature map is double the reference bit length, the neural network operation device may map the input feature map and the weight to the operator such that the number of channels of an output feature map is halved in order to provide the mixed precision operation.

In a case in which the bit length of the weight is double the reference bit length, the neural network operation device may group two adder tree units together into one group and map the weight to the adder tree unit group.

In the case in which the bit length of the input feature map is double the reference bit length, the neural network operation device may group two adder tree units together into one group and map the input feature map to the adder tree unit group.

To provide the data parallelism, the neural network operation device may group adder tree units together based on a weight parallelism size, and map the same weight to adder tree units included in the same adder tree unit group.

In an example, to provide the data parallelism, the neural network operation device may map the weight to the operator based on the reference bit length such that a product of the weight parallelism size and the number of adder tree units is constant.

In operation 730, the neural network operation device performs an operation between the mapped input feature map and the mapped weight.

In an example, the neural network operation device may multiplex respective input feature maps included in a group of two input feature maps into first transformed data and second transformed data that have the reference bit length, perform a multiply operation between the first transformed data and a first weight included in a weight group, perform a multiply operation between the second transformed data and a second weight included in the weight group, and add an output of a first multiplier and an output of a second multiplier.

The neural network operation device may perform an operation between a first portion of an input feature map and a first portion of a weight in a first cycle, and perform an operation between a second portion of the input feature map and the first portion of the weight in a second cycle. The neural network operation device may also perform an operation between the first portion of the input feature map and a second portion of the weight in the first cycle, and perform an operation between the second portion of the input feature map and the second portion of the weight in the second cycle.

The neural network operation device, and other devices, apparatuses, units, modules, and components described herein with respect to FIGS. 1A, 2, 3, 4, 5A-5B, and 6A-6B, such as the CNN 20, the neural network operation device 200, the input feature map buffer210, the weight buffer 220, the controller 230, the operator 240, the adder tree units 240-1 through 240-m, the neural network operation device 300, the input feature map buffer 310, the operator 320, the adder tree units 330-1 through 330-m, the weight buffers 340-1 through 340-c, the first multiplier 410, the second multiplier 420, the first adder tree unit 520-1, the second adder tree unit 520-2, the second multiplexer 530-1, the first adder tree unit 620-1, the second adder tree unit 620-2, the third adder tree unit 620-3, the fourth adder tree unit 620-4, the first adder tree unit 660-1, the second adder tree unit 660-2, the third adder tree unit 660-3, and the fourth adder tree unit 660-4, are implemented by hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-7 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and providing the instructions or software and any associated data, data files, and data structures to a processor or computer so that the processor or computer can execute the instructions.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, the scope of the disclosure is defined not by the detailed description, but by the claims, and all variations within the scope of the claims are to be construed as being included in the disclosure.

## Claims

1. A neural network operation device, comprising:
an input feature map buffer configured to store an input feature map;
a weight buffer configured to store a weight;
an operator comprising an adder tree unit configured to perform an operation between the input feature map and the weight by a unit of a reference bit length; and
a controller configured to map the input feature map and the weight to the operator to provide one or both of a mixed precision operation and data parallelism.

2. The neural network operation device of claim 1, wherein the controller is configured to:
in response to a bit length of the input feature map being half the reference bit length, increase a number of channels of the input feature map to be mapped to the operator by a factor of two, to provide the mixed precision operation.

3. The neural network operation device of claim 1 or 2, wherein the controller is configured to:
in response to a bit length of the weight being half the reference bit length, map the weight to the adder tree unit by a unit of a group of two weights; and
in response to a bit length of the input feature map being half the reference bit length, map the input feature map to the adder tree unit by a unit of a group of two input feature maps.

4. The neural network operation device of claim 3, wherein the adder tree unit comprises:
a multiplier portion comprising a multiplier configured to perform a multiply operation between the input feature map and the weight;
an adder tree configured to add outputs of the multiplier portion; and
an accumulator configured to accumulate and sum outputs of the adder tree, preferably,
wherein the adder tree unit further comprises:
a first multiplexer configured to multiplex respective input feature maps comprised in the group of the two input feature maps into first transformed data and second transformed data that each have the reference bit length,
wherein the multiplier portion comprises:
a first multiplier configured to perform a multiply operation between the first transformed data and a first weight comprised in the group of the two weights; and
a second multiplier configured to perform a multiply operation between the second transformed data and a second weight comprised in the group of the two weights,
more preferably,
wherein the adder tree unit further comprises:
a shifter configured to shift an output of the first multiplier; and
an adder configured to add an output of the shifter to an output of the second multiplier.

5. The neural network operation device of one of claims 1 to 4, wherein the controller is configured to:
in response to a bit length of the input feature map being double the reference bit length, map the input feature map and the weight to the operator such that a number of channels of an output feature map is halved, to provide the mixed precision operation;
and/or
wherein the controller is configured to:
in response to a bit length of the weight being double the reference bit length, group two adder tree units together into one group and map the weight to the one group of the adder tree units,
preferably,
wherein the one group of the adder tree units comprises:
a first adder tree unit; and
a second adder tree unit,
wherein the controller is configured to:
map a first portion of the weight to the first adder tree unit, and map a second portion of the weight to the second adder tree unit.

6. The neural network operation device of one of claims 1 to 5, wherein the controller is configured to:
in response to a bit length of the input feature map being double the reference bit length, group two adder tree units together into one group and map the input feature map to the one group of the adder tree units,
preferably,
wherein the one group of the adder tree units comprises:
a first adder tree unit; and
a second adder tree unit,
wherein the controller is configured to:
map a first portion of the input feature map to the one group of the adder tree units in a first cycle, and map a second portion of the input feature map to the one group of the adder tree units in a second cycle.

7. The neural network operation device of one of claims 1 to 6, wherein the adder tree unit comprises a first adder tree unit configured to:
perform an operation between a first portion of the input feature map and a first portion of the weight in a first cycle, and perform an operation between a second portion of the input feature map and the first portion of the weight in a second cycle, and
the adder tree unit comprises a second adder tree unit configured to:
perform an operation between the first portion of the input feature map and a second portion of the weight in the first cycle, and perform an operation between the second portion of the input feature map and the second portion of the weight in the second cycle;
and/or
wherein the adder tree unit comprises a plurality of adder tree units, and
the controller is configured to:
group the adder tree units together into one group by a unit of a weight parallelism size and map the same weight to the one group of the adder tree units, to provide the data parallelism; and/or
wherein the adder tree unit comprises a plurality of adder tree units, and
the controller is configured to:
map the weight to the operator by matching the weight to the reference bit length such that a product of a weight parallelism size and a number of the adder tree units is constant, to provide the data parallelism.

8. A neural network operation method, comprising:
storing an input feature map and a weight;
mapping the input feature map and the weight to an operator, to provide one or both of a mixed precision operation and data parallelism; and
performing an operation between the mapped input feature map and the mapped weight,
wherein the operator comprises:
an adder tree unit configured to perform the operation by a unit of a reference bit length.

9. The neural network operation method of claim 8, wherein the mapping comprises:
in response to a bit length of the input feature map being half the reference bit length, increasing a number of channels of the input feature map to be mapped to the operator by a factor of two, to provide the mixed precision operation.

10. The neural network operation method of claim 8 or 9, wherein the mapping comprises:
in response to a bit length of the weight being half the reference bit length, mapping the weight to the adder tree unit by a unit of a group of two weights; and
in response to a bit length of the input feature map being half the reference bit length, mapping the input feature map to the adder tree unit by a unit of a group of two input feature maps,
preferably,
wherein the performing the operation comprises:
multiplexing respective input feature maps comprised in the group of the two input feature maps into first transformed data and second transformed data that each have the reference bit length;
performing a multiply operation between the first transformed data and a first weight comprised in the group of the two weights, using a first multiplier;
performing a multiply operation between the second transformed data and a second weight comprised in the group of the two weights, using a second multiplier; and
adding an output of the first multiplier to an output of the second multiplier,
more preferably,
wherein the performing the operation further comprises:
shifting the output of the first multiplier.

11. The neural network operation method of one of claims 8 to 10, wherein the mapping comprises:
in response to a bit length of the input feature map being double the reference bit length, mapping the input feature map and the weight to the operator such that a number of channels of an output feature map is halved, to provide the mixed precision operation;
and/or
wherein the mapping comprises:
in response to a bit length of the weight being double the reference bit length, grouping two adder tree units together into one group and mapping the weight to the one group of the adder tree units,
preferably,
wherein the one group of the adder tree units comprises:
a first adder tree unit; and
a second adder tree unit,
wherein the mapping comprises:
mapping a first portion of the weight to the first adder tree unit; and
mapping a second portion of the weight to the second adder tree unit.

12. The neural network operation method of one of claims 8 to 11, wherein the mapping comprises:
in response to a bit length of the input feature map being double the reference bit length, grouping two adder tree units together into one group and mapping the input feature map to the one group of the adder tree units,
preferably,
wherein the one group of the adder tree units comprises:
a first adder tree unit; and
a second adder tree unit,
wherein the mapping comprises:
mapping a first portion of the input feature map to the one group of the adder tree units in a first cycle; and
mapping a second portion of the input feature map to the one group of the adder tree units in a second cycle.

13. The neural network operation method of one of claims 8 to 12, wherein the performing the operation comprises:
performing an operation between a first portion of the input feature map and a first portion of the weight in a first cycle, and performing an operation between a second portion of the input feature map and the first portion of the weight in a second cycle; and
performing an operation between the first portion of the input feature map and a second portion of the weight in the first cycle, and performing an operation between the second portion of the input feature map and the second portion of the weight in the second cycle.

14. The neural network operation method of one of claims 8 to 13, wherein the adder tree unit comprises a plurality of adder tree units, and
the mapping comprises:
grouping the adder tree units together into one group by a unit of a weight parallelism size and mapping a same weight to the one group of the adder tree units, to provide the data parallelism.

15. The neural network operation method of one of claims 8 to 14, wherein the adder tree unit comprises a plurality of adder tree units, and
the mapping comprises:
mapping the weight to the operator based on the reference bit length such that a product of a weight parallelism size and a number of the adder tree units is constant, to provide the data parallelism.
